# DEMANDE DE BREVET EUROPEEN

(11) **EP 3 493 118 A1**
(43) Date de publication de la demande: **05.06.2019**
(21) Numéro de dépôt: 17306700.0
(22) Date de dépôt: 04.12.2017
(51) Int. Cl.: G06K 19/077, G06K 19/07

(54) **PROCEDE DE REALISATION D'UN DISPOSITIF ELECTRONIQUE PORTABLE A COMMUTATION D'INTERFACES ET DISPOSITIF CORRESPONDANT**

(71) Demandeur: GEMALTO SA, 92190 Meudon (FR)
(72) Inventeur: PRINTEMPS, Morgan, 13881 GEMENOS Cedex (FR); ZEAMARI, Ali, 13881 GEMENOS Cedex (FR)

(57) **Abrégé**

L'invention concerne un procédé de réalisation d'un dispositif électronique portable (2) comportant :
- un microcontrôleur à puce électronique (SE, 4),
- un première interface de communication (9-11) sur ledit microcontrôleur (SE, 4),
- au moins une seconde interface de communication (12-13) connectant ou configuré pour connecter un composant électronique périphérique, au microcontrôleur (SE, 4),

Le procédé est caractérisé en ce qu'il comporte les étapes suivantes :
- fourniture d'un commutateur (7, 8) configuré pour commuter des communications du microcontrôleur (SE, 4), soit sur ladite première interface de communication (9, 10, 11), soit sur ladite seconde interface (12, 13),
- configuration (P1) du microcontrôleur (SE, 4) pour piloter ledit commutateur (7, 8) de manière à sélectionner ladite première ou seconde interface.

L'invention concerne également le dispositif correspondant et un système de communication utilisant ledit dispositif.

## Description

### Domaine de l'invention.

L'invention concerne un procédé et système de communication d'un microcontrôleur de sécurité à puce électronique avec au moins un composant périphérique. Le microcontrôleur de sécurité peut être intégré dans tout dispositif portable à puce électronique et ledit au moins composant périphérique peut être de préférence porté / logés (ou pas) dans ledit dispositif portable.

L'invention concerne plus particulièrement les cartes à puce munis de capteurs d'empreinte et/ou d'afficheur. De telles puces sont configurées avec une interface ISO 7816 pour communiquer avec un lecteur. En outre, elles peuvent avoir au moins une autre interface pour communiquer avec d'autres composants périphériques internes tels que des capteurs (capteur d'empreinte, afficheur, mémoires de masse, horloge de temps réel). L'afficheur peut être destiné par exemple à afficher un cryptogramme bancaire variable type « Dcvv » (Dynamic Card Verification Value en anglais). Des afficheurs permettent aussi d'afficher des codes à usage unique de type OTP (one time password en anglais) pour effectuer des transactions sécurisées en ligne.

L'invention concerne également des produits ou dispositifs électroniques qui utilisent des éléments de sécurité avec des périphériques susvisés par exemple, des clés USB, des montres, des bracelets, des objets à porter (Wearables en anglais).

### Art antérieur.

La demande de brevet WO2011015536 résout un problème proche de celui de l'invention, par l'ajout d'un microcontrôleur complexe dont la fonction est de réaliser une interface entre l'élément sécurisé et des périphériques. L'élément de sécurité comporte, en plus d'un port ISO 7816 nécessaire à la communication avec un lecteur à contacts, un port SWP (Single Wire Protocol en anglais) relié au microcontrôleur additionnel.

### Problème technique.

Les objets portables susvisés ou nouvelles cartes à puce très élaborées, utilisent de plus en plus de composants périphériques incorporés dans le corps de la carte en plus de l'élément sécurisé (puce électronique); L'élément de sécurité nécessite plusieurs ports / interfaces de communication afin de communiquer avec ces périphériques. Cela augmente le coût de l'élément de sécurité, requiert un développement de recherche important et engendre des frais de certification supplémentaires.

L'invention a pour objectif de proposer un procédé de réalisation d'un objet portable susvisé plus économique et plus simple.

### Résumé de l'invention.

L'invention résout ce problème en multiplexant un bus de communication, (notamment le bus de l'interface ISO7816) d'un microcontrôleur de sécurité SE pour ajouter au moins une liaison de communication pour permettre de communiquer avec un périphérique ou un contrôleur externe.

En particulier, l'invention utilise une puce de sécurité basique habituelle ayant une interface telle que ISO 7816 et effectue un multiplexage de cette interface. L'invention permet d'ajouter d'autres bus de communication tels que les bus I2C, sur un bus existant.

De même, l'invention peut utiliser par exemple une puce hybride, configurée pour des communications de type contacts ISO 7816 et radiofréquences de proximité ISO 14443.

L'invention peut comprendre de préférence une carte équipée d'un bornier de contacts électrique sur lequel est connecté un bus de communication standard ISO7816. La carte intègre un élément sécurisé, au moins un périphérique connecté à un bloc commutateur. Le bloc commutateur est connecté d'une part à l'interface ISO7816 sur le microcontrôleur sécurisé SE et d'autres part au bornier de contacts ou sur le périphérique, selon une sélection faite par le pilote du bloc commutateur, par le biais du microcontrôleur SE.

A cet effet, l'invention a pour objet un procédé de réalisation d'un dispositif électronique portable comportant :
- un microcontrôleur à puce électronique,
- une première interface de communication sur ledit microcontrôleur,
- au moins une seconde interface de communication, connectant ou configuré pour connecter un composant électronique périphérique au microcontrôleur,

Le procédé est caractérisé en ce qu'il comporte les étapes suivantes :
- fourniture d'un commutateur configuré pour commuter des communications du microcontrôleur, soit sur ladite première interface de communication, soit sur ladite seconde interface,
- configuration du microcontrôleur pour piloter ledit commutateur de manière à sélectionner ladite première ou seconde interface.

Selon d'autres caractéristiques,
- Le première interface sur ledit microcontrôleur de sécurité permet une communication conforme au standard ISO 7816 ;
- Le microcontrôleur sélectionne ladite seconde interface de communication avec ledit composant périphérique en agissant sur un niveau de potentiel ou impédance d'entrée de son plot (interface) de mise à zéro ;
- Ledit niveau de potentiel est ajusté à l'aide d'au moins une impédance interne de chute de tension du microcontrôleur ou un niveau de tension si ledit plot est configurable en entrée ou en sortie;
- Ladite première interface de communication est sélectionnée quand un signal (RESET) sur un plot du microcontrôleur est d'un niveau haut, et en ce que ladite seconde interface de communication est sélectionnée quand un signal de mise à zéro (RESET) de niveau plus faible que ledit niveau haut est détecté sur le plot correspondant du microcontrôleur ;
- Le commutateur est piloté à la fois par un signal du lecteur sur la ligne de mise à zéro (RESET) et un niveau de potentiel interne du microcontrôleur sur ledit plot correspondant du microcontrôleur ;
- Ledit commutateur et le microcontrôleur sont agencés dans le dispositif de manière à recevoir en parallèle une commande de mise à zéro (RESET) d'un lecteur (avec une électronique plus complexe, il est possible de détecter un reset chaud et de piloter le commutateur) ;
- Le commutateur ou son pilote sontn de préférence, exempts de programme de fonctionnement ou d'unité informatique de traitement ou à processeur. Le commutateur et son pilote utilisent de préférence uniquement des composants discrets ou passifs électroniques.

L'invention a également pour objet le dispositif électronique portable correspondant.

L'invention concerne également un système de communication entre un lecteur et un composant périphérique, caractérisé en ce qu'il comprend le dispositif obtenu, ledit composant périphérique étant interne ou externe au dispositif.

### Brève description des figures.

- La figure 1 illustre un dispositif de communication entre un lecteur / terminal ISO 7816 et un composant périphérique via un élément de sécurité SE, obtenu selon un procédé de réalisation préféré de l'invention ;
- Les figures 1a et 1b illustrent respectivement des schémas de réalisation d'une version simplifiée du pilote DPDT et d'une version améliorée correspondante pour une meilleure détection du reset à chaud ;
- La figure 2 illustre des étapes de communication dans le système de la figure 1 ;
- La figure 3 illustre les lignes ou niveaux de communication vus du lecteur / terminal POS conforme à l'ISO 7816, vus de élément sécurisé et vu des composants périphériques embarqués ou non sur le dispositif ;
- La figure 4 illustre un exemple de lignes ou niveaux de communication vus d'un élément sécurisé SE;
- La figure 5 illustre un exemple de périphériques intégrés ou non dans l'élément sécurisé ainsi que des composants logiciels essentiels ou facultatifs permettant la réalisation des fonctions de traitement des commandes, ainsi que des fonctions de communication avec le lecteur ISO 7816 / NFC ou le composant périphérique intégré ou non dans l'élément sécurisé SE.

### Description.

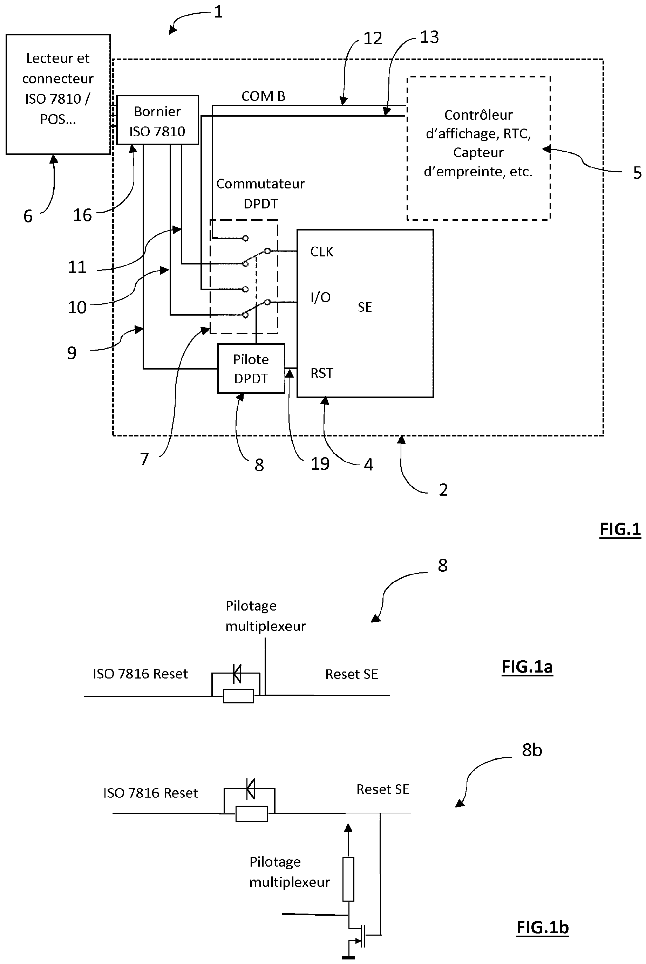

A la figure 1 est illustré un dispositif de communication portable 1 obtenu selon un procédé de réalisation. Selon l'invention, le dispositif comporte un microcontrôleur de sécurité à puce électronique (SE ou 4), une première interface / port de communication (notamment ISO 7816) sur ledit microcontrôleur de sécurité, au moins un composant électronique périphérique 5 connecté, via une seconde interface / port de communication, à l'élément de sécurité.

Dans l'exemple, le dispositif est une carte à puce avec une interface ou bus ISO 7816 mais pourrait être alternativement tout objet portable notamment une montre, un bracelet et avoir une interface d'un type différent tel USB.
Le dispositif permet de faire le multiplexage entre un bus disponible d'un microcontrôleur et au moins un autre bus de communication tel que le bus I2C, SWP ou USB. Le bus de communication disponible est ici conforme au standard ISO 7816.

La carte est équipée ici d'un bornier de contacts 16 (référencés C1-C8 selon le standard ISO 7810), connectés à la puce 4 via son bus de communication standard ISO7816-3 (seuls sont illustrées les lignes 9 (RST), 10 (I/O), 11 (CLK). La carte intègre un élément sécurisé SE comprenant un microcontrôleur 4 sous forme de puce électronique de carte à puce standard. La puce 4 est ici une puce hybride 16, contacts et sans-contact (avec antenne non illustrée) de référence SLC32 (INFINEON) par exemple, mais pourrait être une puce simplement à contacts.

Le dispositif comprend un composant périphérique relié à la puce 4 via un second bus de communication (12, 13) COM B. Il comprend un capteur d'empreinte digitale 5 (avec ou sans microcontrôleur d'acquisition et/ou de traitement spécifique). Toutefois, le composant périphérique pourrait être tout autre composant périphérique tel un afficheur et /contrôleur d'affichage, une horloge temps réel, un générateur de numéro à usage unique (OTP), etc.

Selon une caractéristique du mode préféré, le procédé de réalisation met en oeuvre une étape de fourniture d'un multiplexeur / commutateur configuré pour commuter des communications du contrôleur de sécurité SE soit sur ladite première interface / port de communication ISO 7816, soit sur ladite seconde interface / port de communication du composant périphérique.

On désigne indifféremment dans la description multiplexeur par commutateur ou « switch » multivoies, interface par port, microcontrôleur par puce de circuits intégrés ou puce électronique ou élément de sécurité. De même « DPDT (Double Pole Double Throw en anglais) switch » désigne un circuit interrupteur bipolaire à deux directions) ou un multiplexeur analogique.

Le multiplexeur est par exemple du type correspondant à la référence TS5A23159DGSR (Texas instruments). Tout composant ayant une fonction d'aiguillage ou de commutation de pistes de communication ou de liaisons de communication peut convenir.

Dans l'exemple, le multiplexeur a deux fois deux pistes de communication mais l'invention peut prévoir plusieurs autres pistes sélectionnables.
Le multiplexeur comprend ou est associé à un pilote de commutation 8 (ou pilote de multiplexeur / commutateur). Le pilote de commutation a pour fonction de faire commuter / basculer le multiplexeur vers une des pistes / interfaces de communication.
Le commutateur et son pilote sont constitués de préférence de composants électronique discrets élémentaires ou principalement passifs (résistances, capacité, bobines, diodes, transistor amplificateur, FET...). Ils ne comprennent pas d'unité de traitement informatique ou de microprocesseur ou d'intelligence informatique ou de programme de fonctionnement ou de système d'exploitation (OS).

Ainsi, l'invention a l'avantage d'être très simple et économique à réaliser.

On observe que le plot de remise à zéro RST du microcontrôleur n'est pas affecté par l'invention ou par le multiplexeur. Les communications du lecteur vis-à-vis de ce plot demeurent inchangées quel que soit l'état du pilote 8 et/ou multiplexeur 7. L'invention permet de conserver à tout moment la communication avec le lecteur sur son plot RST de mise à zéro (RESET).

Ainsi, sur le même port servant à relier un lecteur, le microcontrôleur 4 est en mesure de relier un autre composant. Cet autre composant peut avoir ou non le même protocole de communication (par exemple ici ISO 7816) ; Le cas échéant, ce composant périphérique peut être ou non un microcontrôleur secondaire, ou un coprocesseur, esclave ou non, par rapport au microcontrôleur SE, 4. Le composant 5 peut être par exemple, une puce d'identification d'abonné de télécommunication (SIM) et le microcontrôleur SE, 4 une puce bancaire ou inversement. Il peut comprendre un générateur d'OTP (numéro à usage unique).

Ainsi l'invention peut réaliser à moindre coût et avec beaucoup de flexibilité, un dispositif comportant plusieurs programmes applicatifs répartis dans des composants de traitement informatique distincts.

La commutation peut être déclenchée de différentes manières connues. Le multiplexeur est branché à cet effet.

L'élément de sécurité SE n'a pas de bornes / plots libres pour une communication supplémentaire avec un périphérique. Donc, l'invention permet de réutiliser des bornes, des plots ISO7816 (CLK et I/O) pour un autre bus (ex. I2C : SCL et SDA respectivement) grâce à un commutateur (par exemple un commutateur analogique de DPDT).

Dans l'exemple, au moins un périphérique est connecté à un bloc commutateur (7, 8). Le bloc commutateur est connecté d'une part à l'interface compatible ISO 7816 côté microcontrôleur SE ainsi qu'au bornier de contacts 16 ou au périphérique 5 en fonction d'une sélection réalisée par le bloc commutateur ou (pilote) pour la commutation » par le biais du microcontrôleur 4.

Un signal sur une entrée du pilote ou une détection de courant sur un plot d'entrée suffit à déclencher une commutation. Le signal ou le courant / tension peut être amplifié ou pas et déclencher la commutation désirée par exemple à l'aide d'un relais agissant sur différents commutateurs impliqués.

Selon une autre caractéristique de ce mode préféré, le procédé comprend également une étape de configuration du microcontrôleur de sécurité SE de manière à piloter le multiplexeur et sélectionner une première ou seconde interface / port de communication parmi celles disponibles.

La configuration comprend également une mémorisation dans une mémoire du microcontrôleur, de programmes requis pour transformer des commandes, données, requêtes, réponses effectuées dans un protocole de communication disponible, vers au moins un autre protocole de communication ajouté et inversement. La configuration peut également s'appuyer sur un élément intégré matériel au microcontrôleur afin d'implémenter ledit protocole.

### Fonctionnement.

La commutation du commutateur est commandé par un bloc pilote de commutation », déclenché par le signal (ou courant) de RESET ISO7816 actuel.

Par défaut, aucun courant ne circule à travers le plot RST (du fait d'une haute impédance côté SE, pas de chute de potentiel activé (ou de pull down en anglais), de ce fait l'interface ISO7816 est sélectionné par le commutateur / multiplexeur 7, 8.

Pendant la phase où le signal RESET est d'un niveau élevé, le système d'exploitation (OS) de l'élément de sécurité SE peut permettre au plot d'entrée RST (à potentiel configurable par chute de potentiel (pull down) de déclencher le bloc pilote 8 de commutateur 7. Le bloc pilote de commutateur détecte que l'entrée RST véhicule un certain flux de courant à travers la résistance de chute de tension, puis commande le commutateur pour sélectionner le « bus de COM » au lieu du bus (ou interface) ISO7816.

Pendant la phase où le signal RESET est d'un niveau faible, l'élément de sécurité est en mode RESET et aucun courant n'est véhiculé ni détecté sur le plot d'entrée RST de la puce par le bloc pilote ou détecteur ; Alors de ce fait, l'interface ISO7816 est sélectionnée par défaut par le commutateur / multiplexeur (MUX).

Le signal RESET reste pleinement utilisable à la fois côté lecteur ISO7816 et côté élément de sécurité, indépendamment du fait que la chute de tension/polarité (pull-down en anglais) est activée ou pas par l'élément de sécurité.

Ainsi, un signal RESET d'un lecteur demeure pleinement efficace sur l'élément de sécurité quel que soit la configuration du commutateur (7, 8) ou de l'élément de sécurité.

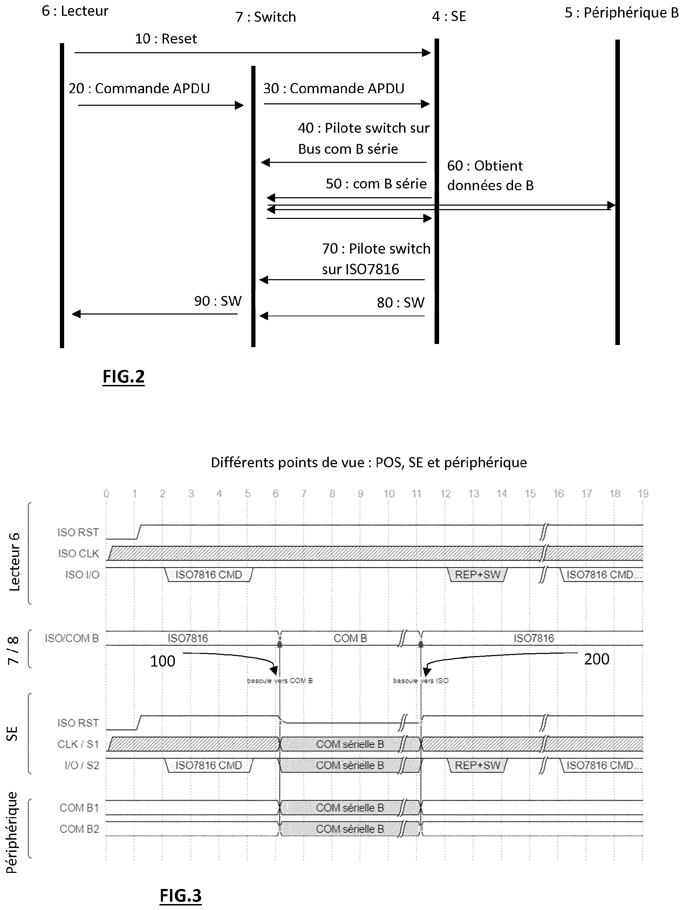

A la figure 2, est illustré un exemple d'étapes d'exécution de commandes APDU d'un lecteur / terminal ISO 7816 au cours d'une communication avec un composant périphérique :
L'état par défaut du commutateur 7, 8 correspond à une sélection de l'interface (10, 11) ISO 7816 plutôt que l'interface 12, 13 du périphérique 5;
   - A l'étape 10 initiale, un lecteur 6 via son connecteur, envoie un signal de mise à zéro (RESET) au microcontrôleur 4 ; La commande RESET traverse le pilote 8 du multiplexeur qui est transparent pour cette commande. La ligne RST (9) relie directement le plot RST du bornier 16 au plot (19) RST correspondant du microcontrôleur SE, 5. On voit sur la figure 3, que le niveau ISO RST du lecteur est maintenu à un niveau haut sur une échelle de durée de communication allant de 1 à 19.
      Puis à l'étape 20, le lecteur envoie au microcontrôleur 4 une commande APDU, via le multiplexeur, commuté sur la communication ISO 7616 et qui l'aiguille 30 vers le microcontrôleur SE, 5. La commande peut être, par exemple, une requête d'authentification biométrique, une requête de validation de code PIN, une transmission d'un message à un afficheur, une récupération d'une valeur de temps dans une horloge temps réel, etc...).
      A la figure 3, la commande est illustrée ISO 7816 CMD sur le plot ISO I/O (10). Elle est reçue sur le plot (19) I/O S2 du microcontrôleur SE correspondant au connecteur ISO I/O du lecteur. Les autres signaux correspondent également à ceux du connecteur de lecteur 6. Le commutateur 7 est commuté par défaut sur l'interface / Bus ISO7618 du lecteur. Le commutateur 7 relie par défaut le lecteur avec le microcontrôleur.
Pendant ce temps, les lignes de communication COM B1, COM B2 (respectivement référencées 12, 13) du composant périphérique 5 ont été exemptes de signaux ;
Lors de l'exécution de la commande APDU, l'élément de sécurité (SE, 4) détecte (en interprétant la commande grâce à un programme applicatif P2 comprenant une étape notamment d'authentification), qu'il a besoin de faire intervenir un composant périphérique 5 (qui peut être un microcontrôleur associé à un capteur d'empreinte digitale) ;
   - Pour ce faire, à l'étape suivante 40, le microcontrôleur SE (en exécution d'un programme P1 de gestion des interfaces), agit sur le commutateur (7, 8) pour qu'il commute vers le bus série ajouté (COM B, 12,13). Cet instant est illustré 100 (figure 3) ; Il correspond à une légère chute de tension au niveau du plot ISO RST (19) du microcontrôleur SE, provoquée par le microcontrôleur SE en exécution du programme de gestion d'interface P1 et détecté par le pilote DPDT 8 du commutateur 7 ;
   - Puis, à l'étape 50, le microcontrôleur SE requiert des données (COM B série) au périphérique (5, B) en adoptant un protocole alternatif correspondant (I2C, SWP ou tout autre bus série fonctionnant sur un ou deux fils électriques) ; Les données requises peuvent être par exemple un résultat d'authentification biométrique, un code PIN tapé sur un clavier en surface du dispositif / carte à puce.
   - à l'étape 60, la requête de données est véhiculée via le commutateur 7 qui renvoie sur le composant périphérique 5. La requête (COM B série) est véhiculée à travers le commutateur 7 vers le composant périphérique 5 sur les lignes CLK / S1 et I/O S2 (fig. 3) ; Dans la foulée, le composant périphérique 5 procède à l'exécution de la communication ou de la requête (COM B série), par exemple, pour authentification par capture d'empreinte, collecte de code PIN et comparaison ;
      Ensuite, à l'étape 60, lorsque la communication avec le composant périphérique (5, B) est terminée, (résultat d'authentification reçu ou PIN code validé ou reçu), le microcontrôleur (4, SE) exécute son programme applicatif P2 qui déclenche le programme P1 ou une étape de gestion des interfaces à l'instant 11 référencé 200 sur la ligne du commutateur (fig. 3) pour amener le commutateur 7, 8 à commuter sur l'interface ISO 7816 en activant le pilote 8.
   - Puis à l'étape 70, le microcontrôleur SE amène le commutateur (7, 8) à commuter vers le bus série initial ISO 7616 en exécution du programme de gestion des interfaces P1 ; On observe ici que le niveau de potentiel sur le plot (19) ISO RST du microcontrôleur est de nouveau haut (sans chute de tension) notamment du fait que la résistance interne de tirage au potentiel de référence zéro n'est pas activée.
   - L'élément de sécurité (microcontrôleur) SE a entretemps effectué le traitement de la réponse du composant périphérique 5 en exécution du programme applicatif P2, avec le cas échéant une transcription de protocole / format des données au préalable; Le traitement susvisé peut consister, par exemple, à effectuer une comparaison des données biométriques (ou du code PIN) saisies avec ceux stockées en mémoire sécurisée. Il peut consister à transmettre le résultat d'une authentification effectuée par le composant 5 (pouvant comprendre ou non un microcontrôleur d'analyse biométrique)
   - A l'étape 80 (instant 12, fig. 3), le microcontrôleur SE, retourne un statut final (ou la réponse reçue) du composant périphérique 5 (ANS + SW) au connecteur du lecteur (6) ISO7816 via une communication 90 à travers le multiplexeur / commutateur 7, 8.

Puis, (fig. 3) le lecteur peut à nouveau envoyer à l'instant 16 une commande ISO7816 CMD comme précédemment sur sa ligne ISO / I/O ou mettre fin à la communication.

### Contrôle / pilotage du commutateur.

Si le plot RST 19 (de remise à zéro) ISO 7816 de l'élément de sécurité SE possède une fonction uniquement de port d'entrée, la commutation de la résistance de chute de potentiel / tension peut être utilisée.

Alternativement, si le plot RST du microcontrôleur SE a une fonction également de port de sortie, le microcontrôleur SE peut piloter le commutateur 7, 8 en utilisant la ligne RST, (19) de remise à zéro (RESET), en activant directement un niveau de tension du plot.
Dans les deux cas, selon le mode préféré, l'action de l'élément de sécurité (ou microcontrôleur) SE sur le plot RST a pour effet d'augmenter le niveau de courant sur la ligne RST, (19) de remise à zéro (RESET), et ce courant peut être converti en tension à l'aide d'une résistance dans le pilote DPDT (8).

La tension qui en résulte, peut piloter directement le commutateur 7, 8 ; Alternativement, la tension peut être amplifiée pour adapter le signal à devenir un paramètre ou signal d'entrée de commutation du commutateur 7,8.

L'invention peut être utilisée notamment pour la carte bancaire biométrique, la seconde communication sérielle vers un périphérique 5 pouvant être connectée pour une fonction d'acquisition d'empreintes digitales.
- L'invention peut être utilisée pour une carte à puce de base de temps (horodateur) : une carte pouvant utiliser un crypto-algorithme basé sur une horloge (p. ex. OCRA) pour la génération de signature ou pour OTP (mot de passe à usage unique).
- Elle peut être utilisée pour des cartes à afficheur : une carte qui utilise un affichage des résultats après une transaction (carte de fidélité, prépayé, porte-monnaie)
- Elle peut être utilisée pour des cartes acoustiques ou d'authentification / détection de voix : une carte qui intègre un microphone / haut-parleur numérique/analogique pour une communication avec l'homme ou une machine.

Grâce à l'invention, les éléments sécurisés SE d'aujourd'hui peuvent être réutilisés dans des cartes plus élaborées avec seulement et principalement un petit changement de logiciel et quelques composants discrets élémentaires. Les éléments de sécurité basique et les moins chers du marché, aujourd'hui, peuvent être utilisés dans nouvelles conceptions complexes ou élaborées.

Une carte à puce conforme à l'invention peut comporter uniquement des contacts ISO7816 ; L'élément sécurisé peut être de type à contacts / sans contact ou à contacts uniquement. L'interface de contacts du microcontrôleur SE a son interface ISO7816 multiplexée au cours d'une transaction (notamment bancaire ou autre), pour activer sa communication avec un périphérique relié et/ou intégré à la carte, sans effet (ou inconvénients) du point de vue du lecteur ISO 7816 (bancaire ou autre).

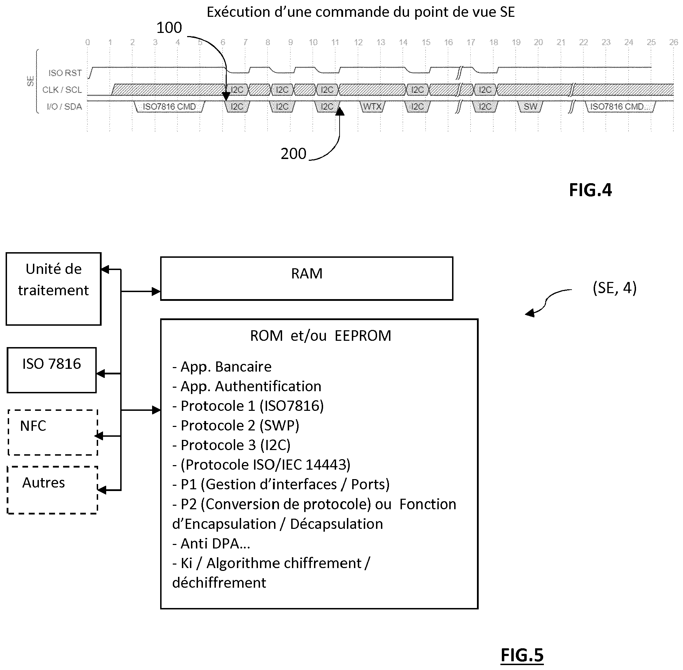

A la figure 4, les lignes (ou de niveaux) de communication vues de l'élément sécurisé SE présentent un début de commande initié par un lecteur ISO 7816 vers un dispositif de communication, puis une séquence de communication entre l'élément sécurisé et un composant périphérique via un protocole I2C et une activation d'un commutateur, et enfin l'envoi par l'élément sécurisé de la réponse liée à la première commande initiée par le lecteur ISO 7816.

Le chronogramme de cette figure 4, correspond au diagramme des séquences, mais avec plusieurs échanges en I2C/ COM B, et une extension de temps liée au protocole ISO7816 (WTX) entre deux échanges I2C. La communication « COM B » peut être provisoirement suspendue (en pause) par le microcontrôleur SE afin de demander une extension de temps de traitement de la commande ISO7816 au lecteur ISO.

A la figure 5 est illustré un exemple de structure d'un microcontrôleur SE, 4 pouvant convenir pour l'invention. Le microcontrôleur est par exemple une puce SLC32 (INFINEON). Hybride (contacts et sans contact).
- Le microcontrôleur SE comprend au moins une interface, ici une interface ISO 7816 et une interface NFC (facultative). Il comprend des mémoires volatiles et non volatiles (RAM, ROM, EEPROM ou Flash).
   En mémoire programme non volatile, le microcontrôleur comprend une application selon l'utilisation (bancaire, identité, fidélité, accès...), une application d'authentification (PIN, biométrique (empreinte digitale, vocale...) ; Il met en oeuvre un premier protocole dédié pour lequel il a été conçu (protocole 1 (ISO7816).
- Le microcontrôleur SE comprend de préférence un programme P2 de conversion protocole (par exemple ISO 7816 en I2C, ou en SWP ou USB...) et inversement ; Il peut comprendre ou mettre en oeuvre une fonction d'encapsulation / désencapsulation des commandes / réponses, données) ;
- Il peut comprendre de préférence des fonctions de sécurité tel qu'une fonction anti DPA... ; Il peut comprendre des clés ki de chiffrement et des fonctions / algorithmes associé(es).

Selon l'invention, le microcontrôleur SE met en oeuvre au moins un second protocole 2 (ex. I2C, USB,...) jusqu'à un protocole « n » selon le nombre de périphériques à gérer. Par ailleurs, l'agissant ici d'une puce hybride, le microcontrôleur SE comprend ici un protocole ISO/IEC 14443 pour communiquer en NFC (facultatif pour l'invention puisque une puce simplement ISO 7816 convient);
- Le microcontrôleur SE, 4 comprend un programme P1 de gestion des interfaces / ports de communication. Lorsqu'il y a plusieurs interfaces à sélectionner, le programme P1 va changer le potentiel du plot (19) de remise à zéro, soit en positionnant la configuration du plot en sortie, soit en activant une impédance d'entrée, (fonction disponible dans la plupart des microcontrôleurs existants).

Le circuit Pilote DPDT (8) assure la détection de ce niveau et permet de protéger le signal RESET venant du lecteur.

La puce SE peut comprendre un port d'entrée « I » ou un port entrée sortie I/O. Ce port peut être de préférence un port de mise à zéro « RST ». Il peut respectivement être relié à une résistance de chute de potentiel, pilotable notamment par porte logique. Alternativement, le port susvisé d'entrée / sortie peut recevoir un potentiel en sortie pilotable par le microprocesseur « µc » du microcontrôleur (SE, 4).

Le niveau de potentiel ou chute de potentiel ou courant peut être détecté par le commutateur de voies / lignes 8. Par exemple, un courant passant par une résistance génère une tension qui peut être, si nécessaire, amplifiée par un montage à transistor (fig. 1b) ou autre circuit amplificateur, qui fait basculer les différentes voies / lignes 10-11 du commutateur 7 vers I/O et CLK du microcontrôleur (SE, 4) ou vers les lignes 12-13 du composant 5.

L'invention a pour objet également un système de communication (1) entre un lecteur (6) et un composant périphérique (5) qui comprend le dispositif (2) susvisé. Le composant peut être interne ou externe au dispositif (2).

## Revendications

1. Procédé de réalisation d'un dispositif électronique portable (2) comportant :
- un microcontrôleur à puce électronique (SE, 4),
- un première interface de communication (9-11) sur ledit microcontrôleur (SE, 4),
- au moins une seconde interface de communication (12-13) connectant ou configuré pour connecter un composant électronique périphérique, au microcontrôleur (SE, 4), **caractérisé en ce qu'**il comporte les étapes suivantes :
- fourniture d'un commutateur (7, 8) configuré pour commuter des communications du microcontrôleur (SE, 4), soit sur ladite première interface de communication (9, 10, 11), soit sur ladite seconde interface (12, 13),
- configuration (P1) du microcontrôleur (SE, 4) pour piloter ledit commutateur (7, 8) de manière à sélectionner ladite première ou seconde interface.

2. Procédé selon la revendication précédente, **caractérisé en ce que** ladite première interface sur ledit microcontrôleur de sécurité permet une communication conforme au standard ISO 7816.

3. Procédé selon l'une des revendications précédentes, **caractérisé en ce que** le microcontrôleur sélectionne ladite seconde interface de communication avec ledit composant périphérique (5) en agissant sur un niveau de potentiel de son plot (19, RST) de mise à zéro.

4. Procédé selon la revendication précédente, **caractérisé en ce que** ledit niveau de potentiel est ajusté à l'aide d'au moins une résistance interne de chute de tension du microcontrôleur (SE, 4).

5. Procédé selon l'une des revendications 3 ou 4, **caractérisé en ce que** ladite première interface de communication (10, 11) est sélectionnée quand un signal (RESET) sur un plot (19, RST) du microcontrôleur est d'un niveau haut,
et **en ce que** ladite seconde interface de communication (12, 13, COM B) est sélectionnée quand un signal de mise à zéro (RESET) de niveau plus faible que ledit niveau haut est détecté sur le plot (19, RST) correspondant du microcontrôleur (SE, 4).

6. Procédé selon la revendication précédente, **caractérisé en ce que** le commutateur (7) est piloté à la fois par un signal du lecteur sur la ligne (9) de mise à zéro (RESET) et un niveau de potentiel interne du microcontrôleur sur ledit plot correspondant (19, RST) du microcontrôleur (SE, 4).

7. Procédé selon l'une des revendications précédentes, **caractérisé en ce que** ledit commutateur (7, 8) et le microcontrôleur (4) sont agencés dans le dispositif (2) de manière à recevoir en parallèle une commande de mise à zéro (RESET) d'un lecteur.

8. Procédé selon l'une des revendications précédentes, **caractérisé en ce que** ledit programme (P1) du microcontrôleur de sécurité (SE) prévoit les étapes suivantes pour l'exécution d'une commande :
- sélection par défaut de la première interface (10, 11) pour la réception des commandes du lecteur (6) ;
- réception (30) et traitement d'une commande provenant du lecteur,
- sélection d'au moins un composant périphérique (5) pour une communication (com B série) avec lui selon son protocole (P2), en mettant le plot de mise à zéro (19, RST) à un niveau bas (40) et transmission (50) d'une requête (COM SERIE) en réponse à ladite commande, au composant périphérique (5),
- récupération (60) et traitement de la réponse du composant périphérique (5),
- sélection (70) de l'interface lecteur en mettant le plot (19, RST) à un niveau haut, ce dernier étant détecté par le commutateur (7) et/ou son pilote (8),
- transmission (80, 90) de la réponse (SW) au lecteur (6).

9. Procédé selon l'une des revendications précédentes, **caractérisé en ce que** le commutateur 7 ou son pilote 8 sont exempts de programme de fonctionnement ou constitués de composants électroniques discrets ou passifs.

10. Dispositif électronique portable (2) comportant :
- un microcontrôleur à puce électronique (SE, 4),
- un première interface de communication (9-11) sur ledit microcontrôleur de sécurité,
- une seconde interface de communication (12, 13), connectant ou configurée pour connecter au moins un composant électronique périphérique (5), au microcontrôleur de sécurité,
**caractérisé en ce qu'**il comporte:
- un commutateur (7, 8) configuré pour commuter des communications du microcontrôleur (SE, 4), soit sur ladite première interface de communication (10, 11), soit sur ladite seconde interface de communication (12, 13),
- un programme (P1) dans le microcontrôleur (SE, 4) pour piloter / gérer ledit commutateur (7, 8) de manière à sélectionner soit ladite première (9-11), soit ladite au moins une seconde interface de communication (12-13).

11. Système de communication (1) entre un lecteur (6) et un composant périphérique (5), **caractérisé en ce qu'**il comprend le dispositif (2) selon la revendication précédente, ledit composant étant interne ou externe au dispositif (2).
